# EUROPEAN PATENT SPECIFICATION

(11) **EP 1 650 508 B1**
(45) Date of publication and mention of the grant of the patent: **22.04.2009**
(21) Application number: 05009805.2
(22) Date of filing: 04.05.2005
(51) Int. Cl.: F25B 30/02, F25B 41/06, F25B 9/00

(54) **Heat-pump type hot water supply system**
Heizwasserversorgungsanlage mit Wärmepumpe
Installation à eau chaude avec pompe à chaleur

(30) Priority: 25.10.2004 JP 2004309392
(43) Date of publication of application: 26.04.2006
(73) Proprietor: Panasonic Corporation, Kadoma-shi Osaka 571-8501 (JP)
(72) Inventor: Watanabe, Yasushi, Kusatsu-shi Shiga 525-0057 (JP)
(74) Representative: Turi, Michael

(56) References cited:
- EP-A- 1 162 419
- DE-A1- 3 219 277
- DE-A1- 10 237 840
- US-A1- 2004 134 217

## Description

The present invention relates to a heat-pump type hot water supply system.

A conventional heat-pump type hot water supply system includes a refrigerant heat exchanger for performing a heat exchange operation of refrigerant when it is supplied from a water heat exchanger to a decompressor and from an evaporator to a compressor (see, for example, Japanese Patent No. 3316444).

In the forgoing conventional system, however, a refrigerant line is installed to exchange heat for the refrigerant supplied from the evaporator to the compressor. This arrangement results in a deterioration of the coefficient of performance (COP) due to increased in-line head loss.

EP-A-1 162 419 discloses a hot-water supply system having only one decompressor.

It is, therefore, an object of the present invention to provide a heat-pump type hot water supply system capable of suppressing a rise in refrigerant pressure and a deterioration of COP as the water temperature of the hot water supply system or the exterior air temperature increases.

In accordance with the present invention, there is provided a heat-pump type hot water supply system including: a heat pump cycle in which a compressor, a water heat exchanger for performing a heat exchange between water and a refrigerant, a first decompressor, an intermediate heat exchanger for performing a heat exchange between the refrigerant and exterior air, a second decompressor, an evaporator for performing a heat exchange between the refrigerant and the exterior air are connected in order; a water temperature sensor for detecting a temperature of water entering the water heat exchanger; an exterior air temperature sensor for detecting an exterior air temperature; and a controller for controlling operations of the first and the second decompressor, wherein a valve opening degree of the first and the second decompressor is controlled based on detection values obtained by the water temperature sensor and/or the exterior air temperature sensor.

When the water temperature or the exterior air temperature is low, a pressure reduction is performed by using the first decompressor and opening entirely a valve of the second decompressor, so that the intermediate heat exchanger then functions as an evaporator. As a result, COP can be improved. Further, when the water temperature or the exterior air temperature is high, a pressure reduction is performed by using the second decompressor and opening entirely a valve of the first decompressor, so that the intermediate heat exchanger then functions as a radiator. As a result, the pressure of high-pressure side refrigerant can be reduced and the COP can be improved.

With the above configuration, the heat-pump type hot water supply system in accordance with the present invention is capable of preventing a pressure rise of the refrigerant and a deterioration of COP when the temperature of water entering the water heat exchanger or the exterior air temperature increases, while it is capable of improving the COP when the water temperature is low.

In the above heat-pump type hot water supply system, the refrigerant may be carbon dioxide. In this case, the operation of the hot water supply system may be forced at a very high design pressure (about 14 Mpa) because the pressure inside the cycle increases beyond a threshold pressure of the refrigerant. Therefore, when the water temperature is high, by preventing a rapid pressure increase, increasing the design pressure of high-pressure components can be prevented, thereby reducing the overall system costs of a pressure vessel (heat exchanger) or a refrigerant-related functional component (expansion valve).

The above and other objects and features of the present invention will become apparent from the following description of preferred embodiments given in conjunction with the accompanying drawings, in which:
Fig. 1 is a configuration view of a main body of a heat-pump type hot water supply system in accordance with a first preferred embodiment of the present invention;
Fig. 2 sets forth a diagram to describe an operation of the heat-pump type hot water supply system shown in Fig.1;
Fig. 3 presents a diagram (Mollier diagram) to describe an operation of a heat-pump type hot water supply system in accordance with a second preferred embodiment of the present invention; and
Fig. 4 provides a diagram (Mollier diagram) to describe another operation of the heat-pump type hot water supply system in accordance with the second embodiment of the present invention.

Hereinafter, preferred embodiments of the present invention will be described with reference to the accompanying drawings. It is to be noted that the present invention is not limited thereto.

### (A first preferred embodiment)

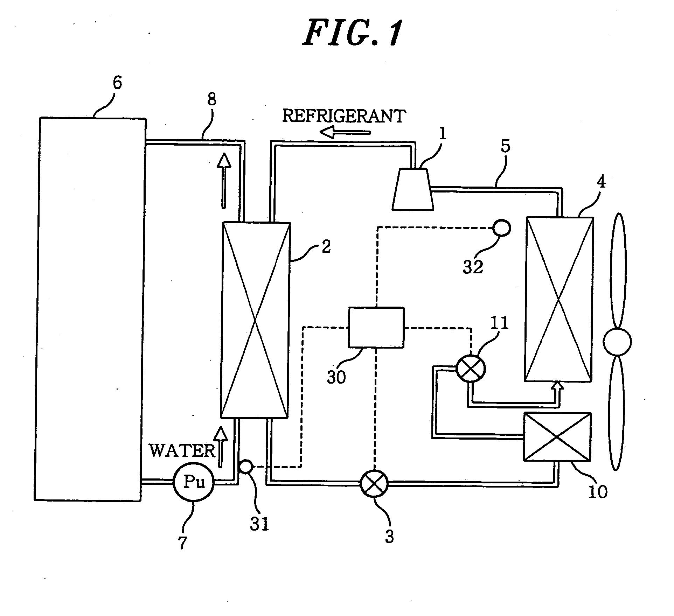

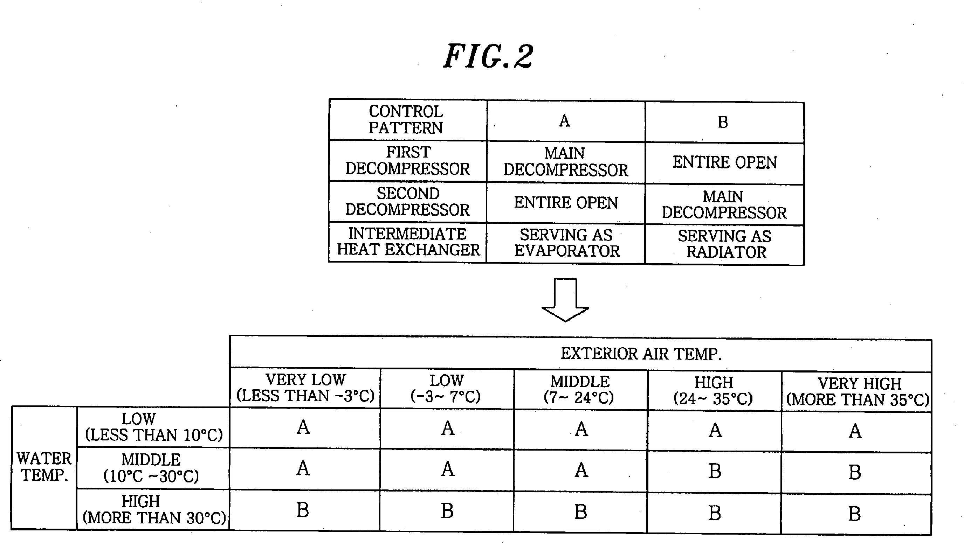

Fig. 1 shows a configuration of a heat-pump type hot water supply system in accordance with a first preferred embodiment of the present invention and Fig. 2 explains a control operation thereof. The hot water supply system includes a heat pump cycle in which compressor 1, water heat exchanger 2 for performing a heat exchange between water and a refrigerant, i.e., for performing a heat exchange operation in which heat of refrigerant is transferred to water, first decompressor (electric expansion valve) 3, intermediate heat exchanger 10 for performing a heat exchange operation between the refrigerant and exterior air, second decompressor (electric expansion valve) 11, evaporator 4 for performing a heat exchange operation between the refrigerant and the exterior air are coupled in an annular shape via refrigerant line 5. The heat pump cycle is configured to adjust valve opening level of the decompressors. Further, the hot water supply system also includes hot-water storage tank 6 for storing a liquid to be supplied, liquid passage 8 through which the liquid stored in hot-water storage tank 6 circulates in the hot water supply system, pump 7 for flowing the liquid in hot-water storage tank 6 in liquid passage 8, water temperature sensor 31 for detecting a temperature of water entering water heat exchanger 2, exterior air temperature sensor 32 for detecting an exterior air temperature, microcomputer 30 serving as a controller for controlling the first and the second decompressor 3 and 11 by means of the water temperature sensor 31 and the exterior air temperature sensor 32.

Hereinbelow, an operation of the heat-pump type hot water supply system with the above configuration will be described. Fig. 2 explains a control operation for determining the function of intermediate heat exchanger 10 when the heat-pump type hot water supply system is operated. As can be seen from Fig. 2, if the heat-pump type hot water supply system is set to perform a pressure reduction by using first decompressor 3 while opening entirely the valve of second decompressor 11, intermediate heat exchanger 10 functions as an evaporator (this operation will be referred to as control pattern A). As intermediate heat exchanger 10 serves as the evaporator, an endothermic capacity increases, which in turn results in an increase of COP as well.

Further, if the heat-pump type hot water supply system is set to perform a pressure reduction through the use of second decompressor 11 while opening entirely the valve of first decompressor 3, intermediate heat exchanger 10 then functions as a radiator (this operation will be referred to as control pattern B). Accordingly, unlike a case that uses water heat exchanger 2 only, the pressure of a high-pressure side refrigerant can be reduced. The operation of the control pattern A or B is determined by a combination of detection values obtained by water temperature sensor 31 and exterior air temperature sensor 32. In the overload state where the water and the exterior air temperatures are high, the reduction in the pressure of the high-pressure side refrigerant can help lower the system cost of a pressure vessel or a refrigerant-related functional component from an increase in a design pressure.

Further, although the operation of the control pattern A or B is determined by the combination of the detection values of water temperature sensor 31 and exterior air temperature sensor 32 in this preferred embodiment, it is also possible to obtain virtually the same effect by using either one of them.

### (Second preferred embodiment)

The following describes a second preferred embodiment of the present invention in which carbon dioxide is employed as a refrigerant of the heat pump type hot water supply system configured as described in the first embodiment.

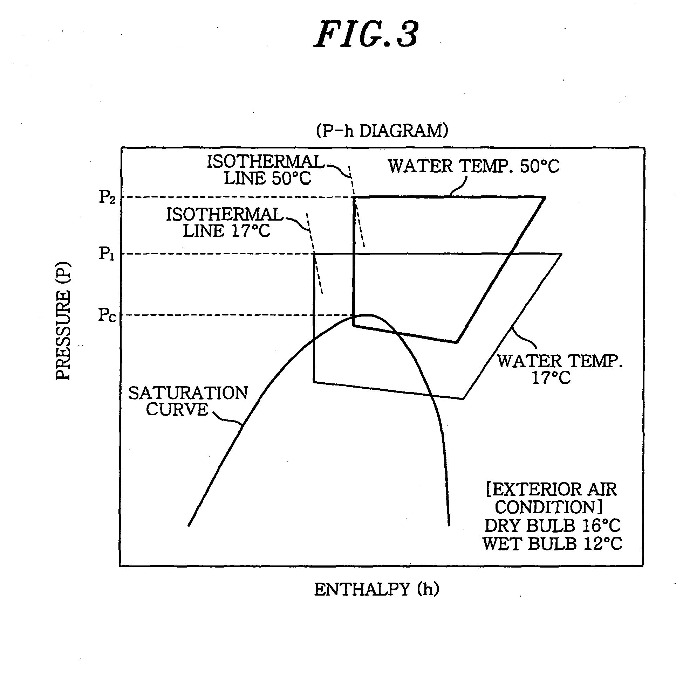

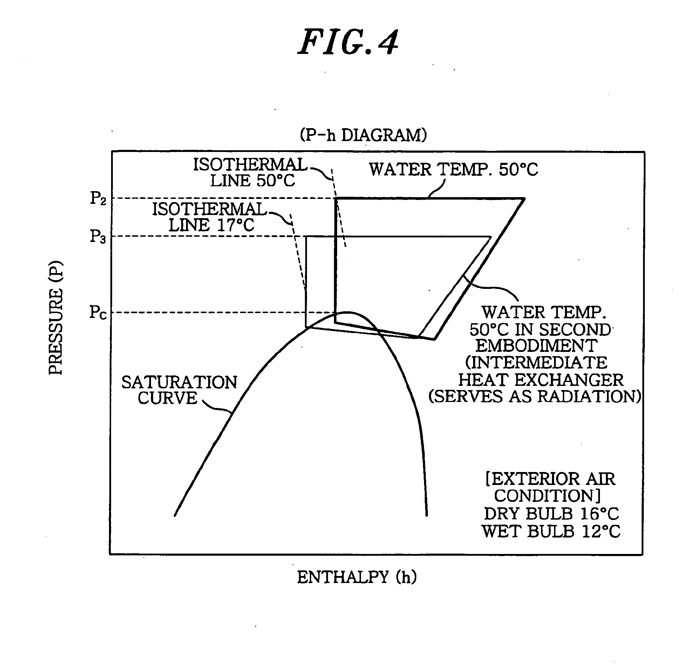

An operation of the second embodiment will be described. Fig. 3 shows a Mollier diagram when intermediate heat exchanger 10 serves as an evaporator while Fig. 4 provides a Mollier diagram (p-h diagram) when intermediate heat exchanger 10 serves as a radiator. As can be seen from Fig. 3, if the temperature of water increases from 17 °C to 50 °C when the intermediate heat exchanger functions as evaporator, the heat-pump type hot water supply system is forced to be operated at a very high pressure based on an isothermal line of carbon dioxide forming a supercritical cycle, so the COP of the operation becomes low in comparison with that of an operation when the water temperature is low.

Meanwhile, in accordance with the second embodiment where the intermediate heat exchanger functions as radiator, intermediate heat exchanger 10 performs a heat exchange between the exterior air (16 °C) and the refrigerant, so the temperature around an outlet of the radiator is reduced near the temperature of the exterior air based on the isothermal line of carbon dioxide forming the supercritical cycle. Since the density of the refrigerant increases as the temperature of the radiator outlet is reduced, a refrigerant discharge pressure is reduced. The reduction in the refrigerant discharge pressure also reduces a power consumption of the compressor to thereby increase the COP and prevents a rise in a design pressure ultimately to help lower the system costs of a pressure vessel and a refrigerant-related functional component.

The present invention described above provides a heat-pump type hot water supply system capable of preventing an increase of a refrigerant pressure and a deterioration of coefficient of performance when the water temperature or the exterior air temperature increases.

While the invention has been shown and descried with respect to the preferred embodiments, it will be understood by those skilled in the art that various changes and modifications may be made without departing from the scope of the invention as defined in the following claims.

## Claims

1. Heat-pump type hot water supply system comprising:
a heat pump cycle in which a compressor (1), a water heat exchanger (2) for performing heat exchange operation between water and a refrigerant, a first decompressor (3), an intermediate heat exchanger (10) for performing heat exchange operation between the refrigerant and exterior air, a second decompressor (11), an evaporator (4) for performing heat exchange operation between the refrigerant and the exterior air are connected in order;
a water temperature sensor (31) for detecting a temperature of water entering the water heat exchanger;
an exterior air temperature sensor (32) for detecting an exterior air temperature; and
a controller (30) for controlling operations of the first (3) and the second (11) decompressors,
wherein a valve opening level of the first and the second decompressors is controlled based on detection values obtained by the water temperature sensor and/or the exterior air temperature sensor.

2. The system of claim 1, wherein the refrigerant is carbon dioxide.

## Patentansprüche

1. Wärmepumpenartiges Warmwasserlieferungssystem, umfassend:
einen Wärmepumpenzyklus, in dem ein Kompressor (1), ein Wasserwärmetauscher (2) zum Durchführen einer Wärmetauschoperation zwischen Wasser und einem Kältemittel, einen ersten Dekompressor (3), einen Zwischenwärmetauscher (10) zum Durchführen einer Wärmetauschoperation zwischen dem Kältemittel und Außenluft, einen zweiten Dekompressor (11), einen Verdampfer (4) zum Durchführen einer Wärmetauschoperation zwischen dem Kältemittel und der Außenluft verbunden angeordnet sind;
einen Wassertemperatursensor (31) zum Detektieren einer Temperatur des Wassers, das in den Wasserwärmetauscher eintritt;
einen Außenlufttemperatursensor (32) zum Detektieren einer Außenlufttemperatur; und
eine Steuereinheit (30) zum Steuern von Operationen des ersten (3) und zweiten (11) Dekompressors,
wobei ein Ventilöffnungsniveau des ersten und zweiten Dekompressors auf der Grundlage von Detektierwerten gesteuert wird, die von dem Wassertemperatursensor und/oder dem Außenlufttemperatursensor erhalten werden.

2. System gemäß Anspruch 1, wobei das Kältemittel Kohlendioxid ist.

## Revendications

1. Système d'alimentation en eau chaude du type pompe à chaleur comprenant :
➢ un cycle de pompe à chaleur dans lequel un compresseur (1), un échangeur de chaleur à eau (2) destiné à effectuer une opération d'échange de chaleur entre de l'eau et un fluide frigorigène, un premier décompresseur (3), un échangeur de chaleur intermédiaire (10) destiné à effectuer une opération d'échange de chaleur entre le fluide frigorigène et l'air extérieur, un second décompresseur (11), un évaporateur (4) destiné à effectuer une opération d'échange de chaleur entre le fluide frigorigène et l'air extérieur, sont reliés dans cet ordre ;
➢ un capteur de température de l'eau (31) destiné à détecter la température de l'eau qui pénètre dans l'échangeur de chaleur à eau ;
➢ un capteur de température de l'air extérieur (32) destiné à détecter la température de l'air extérieur ; et
➢ un contrôleur (30) destiné à commander le fonctionnement du premier (3) et du deuxième (11) décompresseur,
dans lequel les niveaux d'ouverture de soupape du premier et du deuxième décompresseur sont commandés sur la base des valeurs de détection obtenues par le capteur de température de l'eau et / ou le capteur de température de l'air extérieur.

2. Système selon la revendication 1, dans lequel le fluide frigorigène est l'anhydride carbonique.
